# EUROPEAN PATENT SPECIFICATION

(11) **EP 2 250 295 B1**
(45) Date of publication and mention of the grant of the patent: **04.01.2012**
(21) Application number: 08768912.1
(22) Date of filing: 13.02.2008
(51) Int. Cl.: C22C 29/12, C22C 30/02, C22C 32/00, H01M 8/12

(54) **CU-BASED CERMET FOR HIGH-TEMPERATURE FUEL CELL**
CERMET AUF CU-BASIS FÜR HOCHTEMPERATUR-BRENNSTOFFZELLE
CERMET À BASE DE CU POUR PILE À COMBUSTIBLE HAUTE TEMPÉRATURE

(30) Priority: 04.02.2008 US 26079
(43) Date of publication of application: 17.11.2010
(73) Proprietor: The Regents of the University of California, Oakland, CA 94607 (US)
(72) Inventor: TUCKER, Michael, C., Berkeley CA 94702 (US); JACOBSON, Craig, P., Moraga CA 94556 (US)
(74) Representative: Browne, Robin Forsythe
(86) International application number: PCT/US2008/053869
(87) International publication number: WO 2009/099447

(56) References cited:
- WO-A-00/52780
- WO-A-2006/044313
- US-A1- 2007 117 006
- LEE, SUNGKYU ET AL: "Fabrication and characterization of Cu/YSZ cermet high-temperature electrolysis cathode material prepared by high-energy ball-milling method" JOURNAL OF ALLOYS AND COMPOUNDS , 448(1-2), 363-367 CODEN: JALCEU; ISSN: 0925-8388, 2008, XP002500319
- GORTE R J ET AL: "ANODES FOR DIRECT OXIDATION OF DRY HYDROCARBONS IN A SOLID-OXIDE FUEL CELL" ADVANCED MATERIALS, WILEY VCH, WEINHEIM, DE, vol. 12, no. 19, 2 October 2000 (2000-10-02), pages 1465-1469, XP000966766 ISSN: 0935-9648
- PARK S ET AL: "DIRECT OXIDATION OF HYDROCARBONS IN A SOLID OXIDE FUEL CELL I. METHANE OXIDATION" JOURNAL OF THE ELECTROCHEMICAL SOCIETY, ELECTROCHEMICAL SOCIETY. MANCHESTER, NEW HAMPSHIRE, US, vol. 146, no. 10, 1 January 1999 (1999-01-01), pages 3603-3605, XP009014798 ISSN: 0013-4651

## Description

### Field of the invention

The invention relates to copper-based cermet compositions, methods for preparing the compositions and to the use of the compositions.

### Background

Solid oxide fuel cells (SOFCs) and related high-temperature electrochemical devices include a porous anode, porous cathode and dense ceramic electrolyte. Oxidation of gaseous reactants occurs in the porous anode. The anode must efficiently conduct ions and electrons, and cermet mixtures of ceramic ionic conductor and metal or electrolyte and mixed ionic electronic conductor (MIEC) are typically used in the art. The nickel-yttria-stabilized zirconia (Ni-YSZ) anode has been most widely developed because of its ease of manufacture, performance, and longevity. Molten metals do not generally wet ceramic surfaces, so the temperature of cermet preparation is typically below the melting point of the metal, or else the metal will dewet, pool, extrude from the ceramic network, etc. This would lead to loss of contact between the ceramic and metal as well as loss of interconnection in the metal network. Ni-YSZ cermets are typically created by sintering a mixture of Ni oxide and YSZ in air at high temperature (1100-1450°C). The Ni oxide is then converted to metallic Ni upon exposure to reducing atmosphere at elevated temperature (500-1000°C). The fuel stream of a SOFC is suitably reducing to effect this transition. The manufacture of Cu/YSZ cermets is disclosed in Sun Kyu, Lee et al., 'Fabrication and characterization of Cu/YSZ cermet high-energy ball-milling method 1. 900°C-sintered, 2007, Journal of Alloys and compounds 448 (2008) 363-367.

### Summary of the Invention

The present invention provides Cu-based cermets and methods of preparing them. The Cu-based cermets have interpenetrating networks of copper or copper alloy and stabilized zirconia that are in intimate contact. The cermets display high electronic connectivity through the copper or copper alloy phase. Methods of preparing the cermets involving sintering a mixture of ceramic and copper-based powders in a reducing atmosphere at a temperature above the melting point of the copper or copper alloy are provided. Also provided are electrochemical structures having a Cu-based cermet, e.g., as an anode structure or as a barrier layer between an anode and a metal support. Applications of the cermet compositions and structures include use in high-operating-temperature electrochemical devices, including solid oxide fuel cells, hydrogen generators, electrochemical flow reactors, etc.

One aspect of the invention given in claim 1 relates to a method of preparing a copper-based cermet. The method includes the operations of providing a mixture of ceramic and copper-based particulate compositions; with the ceramic particulate composition composed of stabilized zirconia particles or powder, and the copper-based particulate composition composed of copper or copper alloy particles or powder; and sintering the mixture at a temperature greater than the melting point of the copper-based composition in a reducing atmosphere to thereby form a cermet composition of interpenetrating copper-based metal and ceramic networks.

The copper-based particulate composition may include pure copper or a copper alloy. Alloying metals that may be used include nickel, chromium, molybdenum, titanium, vanadium, hafnium and zirconium. When a copper alloy is used, it may be provided as a powdered alloy, or as mixture of some combination of pure metal powders, powdered oxides of metals, powdered hydrides of metals, and/or some other metal-containing precursor powders. In certain embodiments, the resulting alloy composition may include about 0 - 90 wt. % Ni. In addition it may include about 0.1 - 10 wt. % Cr, Mo, Ti, V, Hf or Zr or combinations thereof. Examples of compositions include CuNi, Cu₉₄Ni₄Cr₂, Cu₉₄Ni₄Ti₂ and Cu₉₄Ni₄Mo₂ powders. The stabilized zirconia typically includes about 1-11 mol % of one of the following dopants: yttria, calcia, scandia, ceria, and combinations thereof.

The method may also include mixing the particulate compositions, e.g., into a paste, and/or drying, grinding, sieving, etc., the mixture to produce the mixture of ceramic and copper-based particulate compositions that is to be sintered. The mixture may also include poreformer or other additives in addition to the particulate compositions.

The sintering temperature is at or above the melting point of the copper-based composition. In certain embodiments, the sintering temperature is significantly higher than the melting point, e.g., at least about 100°C, 150°C, or 200°C higher. This temperature depends on the alloy melting point; in certain embodiments, the sintering temperature is at least about 1200°C or 1300°C. Sintering at high temperature results in melting the copper or copper alloy; molten copper or copper alloy is able to wet the zirconia particles to form the interpenetrating networks.

In certain embodiments, the Cu-based cermet may also be prepared with or in contact with electrolyte and/or metal support layers and/or other electrochemical device structure layers. For example, in particular embodiments, the method includes cosintering a green or bisque-fired electrolyte precursor in contact with the mixture. In certain embodiments, the method involves coating the mixture on a green or bisque-fired metal support and cosintering the metal support with the mixture. Also in certain embodiments, all three layers may be cosintered.

Embodiments of this method may be used to produce cermets having a fine microstructure, e.g., with a particle or feature size between about 0.1 and 10 µm. Dense or porous cermets may be produced.

Another aspect of the invention given in claim 10 relates to a Cu-based cermet composition. The cermet composition is composed of interpenetrating ceramic and copper-based networks, with the ceramic network composed of a stabilized zirconia, and the copper-based network including copper and at least one of nickel, chromium, molybdenum, titanium, vanadium, hafnium and zirconium.

The zirconia typically includes about 1-11 mol % of one of the following dopants: yttria, calcia, scandia, ceria, and combinations thereof. In certain embodiments, the zirconia is a yttria-stabilized zirconia, or YSZ. In certain embodiments, the copper-based network contains about 10%-99.9 wt % copper, about 0-90 wt % nickel and about 0.1-10 wt % of one of: chromium, molybdenum, titanium, vanadium, hafnium, zirconium, and combinations thereof. Examples include CuNi, Cu₉₄Ni₄Cr₂, Cu₉₄Ni₄Ti₂ and Cu₉₄Ni₄Mo₂. In particular embodiments, the copper-based network is at least about 50 wt. % copper. Also in certain embodiments, the copper-based network is an interconnected, electronically conductive network, and the zirconia network an interconnected, ionically conductive network.

The Cu-based cermet composition may have a fine microstructure, e.g., with the average feature size of one or both networks ranging from about 0.1 - 10 µm in diameter. The cermet composition may be porous or dense. Average pore size may also range from about 0.1 - 30 µm in diameter. In certain embodiments, the cermet composition is in contact with a porous metal support and/or dense electrolyte layer, e.g., as an anode structure for a solid oxide electrochemical device.

Another aspect of the invention given in claim 12 relates to an electrochemical device structure that includes a porous anode, a dense electrolyte, and a copper-based cermet material, with the cermet material having interpenetrating copper-based metal and ceramic networks. The electrochemical structure may be planar or tubular. The copper-based metal network may be a copper alloy network, e.g., with at least one of nickel, chromium, molybdenum, titanium, vanadium, hafnium and zirconium. In certain embodiments, the copper-based cermet material is the porous anode and is in contact with the dense electrolyte. In one embodiment, the dense electrolyte and ceramic network are YSZ.

In certain embodiments, the copper-based cermet material is in contact with the porous anode, e.g., as a barrier layer between the anode and a metal support. In one example, the porous anode is a Ni-YSZ cermet and/or the metal support is ferritic stainless steel. The Cu-based cermet may reduce interdiffusion between the anode and the support.

### Brief Description of the Drawings

Figure 1 is a process flow chart depicting stages of a process of producing a Cu-based cermet in accordance with various embodiments.
Figures 2a-c illustrate multi-layer structures having Cu-based cermet electrode in accordance with various implementations.
Figure 3 is a schematic representation of an electrolyte/Cu-based cermet multi-layer structure showing details of the Cu-based cermet according to certain embodiments.
Figure 4 shows a schematic representation of electrochemical structure having a Cu-based cermet barrier layer.
Figure 5a is an image of cross section of an electrochemical cell prepared according to an embodiment. The cell includes a YSZ/Cu-alloy cermet porous anode layer, a YSZ dense electrolye layer, a LCSF cathode and Pt current collection layer.
Figure 5b is an image showing the microstructure of the YSZ/CU-alloy cermet shown in Figure 5a.
Figure 6 shows low and high magnification SEM and EDS images of the YSZ and copper-alloy phases of the YSZ/Cu-alloy cermet shown in Figures 5a and 5b.
Figure 7a is a high magnification electron image of a slice through the YSZ/Cu alloy cermet shown in Figures 5a and 5b.
Figure 7b is a high magnification image of a slice through the YSZ/Cu alloy cermet shown in Figures 5a and 5b.
Figure 8a is a graph of AC impedance data for the electrochemical cell shown in Figure 5a taken at 800°C.
Figure 8b is a graph showing polarization behavior for the electrochemical cell shown in Figure 5a.
Figure 8c is a graph showing cell potential recovery after current interruption for the electrochemical cell shown in Figure 5a.
Figure 9a is graph of AC impedance data for a stainless steel-supported solid oxide fuel cell according to an embodiment of the invention having a cosintered YSZ/Cu alloy anode layer
Figure 9b is graph showing polarization behavior for the stainless steel-supported solid oxide fuel cell having a cosintered YSZ/Cu alloy anode layer.
Figure 10 is an image of a dense YSZ/Cu cermet according to an embodiment of the invention.
Figures 11a and 11b are graphs showing interdiffusion between a stainless steel metal support and a Ni-YSZ cermet anode of a metal support/Cu-YSZ barrier layer/Ni-YSZ anode sintered structure: Figure 11a is a graph of the Ni content of the stainless steel support as a function of distance from the edge of the support touching the Ni-YSZ or Cu-YSZ layer and Figure 11b is a graph showing the EDS traces for the metal particles in the Ni/YSZ layer after sintering.

### Detailed Description of the Invention

### Introduction

The present invention is given in the claims and relates to copper-based cermet compositions and structures, which may be used in solid oxide fuel cells and related high-temperature electrochemical devices. These devices include a porous anode, porous cathode and dense ceramic electrolyte. Oxidation of gaseous reactants occurs in the porous anode. The anode must efficiently conduct ions and electrons. As indicated above, cermet mixtures of ceramic ionic conductor and metal or electrolyte and mixed ionic electronic conductor (MIEC) are typically used, with the Ni-YSZ (yttria-stabilized zirconia) anode has been most widely developed. However, drawbacks of Ni-YSZ include its high cost, low strength, intolerance to redox cycling, and poisoning by carbon and sulfur which are present in many fuels of interest for SOFCs.

The Cu-based cermets of the invention provide an alternative to Ni-YSZ cermets. Cu is an alternative catalyst to Ni, and has shown very promising performance, especially in the presence of carbon and sulfur in the fuel stream. The Cu/Cu-oxide transition occurs at higher oxygen partial pressure than the Ni/Ni-oxide transition, so improved redox tolerance is expected as well.

Also provided are methods of preparing Cu-based cermets. As described above, Ni-YSZ cermets are typically created by sintering a mixture of Ni oxide and YSZ in air at high temperature (1100-1450°C). The Ni oxide is then converted to metallic Ni upon exposure to reducing atmosphere at elevated temperature (500-1000°C). The fuel stream of a SOFC is suitably reducing to effect this transition. The result is interpenetrating networks of Ni and YSZ with fine structure (0.5-5 µm particle size). This process can not be accomplished with Cu oxide and YSZ because these materials react at high temperature in air. One method of creating a Cu-electrolyte cermet anode is by infiltration of Cu into the pores of a presintered porous electrolyte structure. The infiltration process must be repeated many times to build up sufficient Cu loading such that an efficient percolating network for electron transport is provided. This is an expensive and time-consuming process. Embodiments of the present invention provide a method for producing a highly conductive Cu-electrolyte cermet in a single step, offering a significant advantage over existing technology. The method involves sintering a mixture of fine Cu and electrolyte (e.g. YSZ) particles in reducing atmosphere at temperatures near or above the melting point of Cu.

Reference will now be made in detail to specific embodiments of the invention. Examples of the specific embodiments are illustrated in the accompanying drawings. While the invention will be described in conjunction with these specific embodiments, it will be understood that it is not intended to limit the invention to such specific embodiments. On the contrary, it is intended to cover variations, as may be included within the scope of the appended claims. In the following description, numerous specific details are set forth in order to provide a thorough understanding of the present invention. The present invention may be practiced without some or all of these specific details. In other instances, well known process operations have not been described in detail in order not to unnecessarily obscure the present invention.

The present invention was developed in the context of solid oxide fuel cells, and is primarily described in that context in the present application. However, it should be understood that the invention is not limited to this context, but instead may be applied in a variety of other contexts, including other electrochemical devices. The invention is applicable in other high temperature applications that require mixed ionic electronic conductors.

### Preparing Cu-based cermets

One aspect of the invention relates to novel processes of preparing Cu-based cermets. The methods involve sintering a mixture of fine Cu and ceramic (e.g., YSZ) particles in reducing atmosphere at temperatures above the melting point of Cu. Molten metals do not generally wet ceramic surfaces, so the temperature of cermet preparation is typically below the melting point of the metal, or else the metal will dewet, pool, and extrude from the ceramic network. This leads to loss of contact between the ceramic and metal as well as loss of interconnection in the metal network. Unlike most molten metals, copper and copper alloys have good wetting on ceramic surfaces such as YSZ. Sintering the particulate mixture above the melting point allows the copper phase to occupy the void space in the interconnected ceramic lattice, while remaining interconnected.

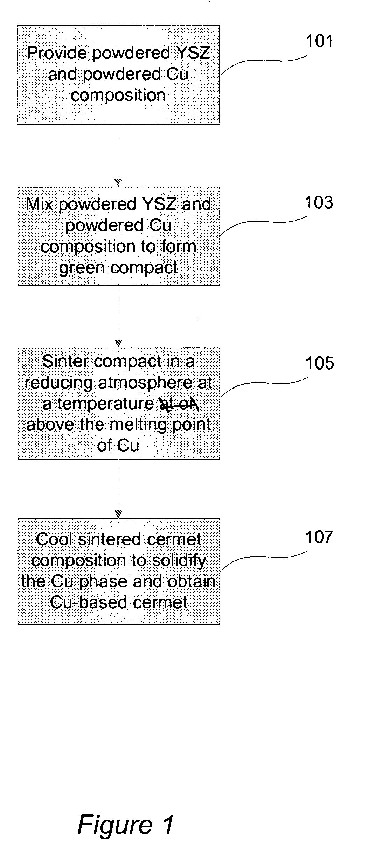

Figure 1 is a process flow chart depicting stages of a process of producing a Cu-based cermet in accordance with various embodiments of the present invention. First, powdered ceramic and powdered copper compositions are provided. Block 101. For the purposes of discussion, Figure 1 and much of the below discussion refers to yttria-stabilized zirconia or YSZ, though it should be understood that other ceramics in the family of oxygen-ion-conducting stabilized zirconia ceramics may be used in the processes, compositions and structures described below and that references to YSZ also include these. Generally, these include oxygen-ion-conducting zirconia ceramics having about 1-11 mol % one of the following dopants: yttria, calcia, scandia, ceria, and mixtures thereof. The stabilized zirconia powder may have a tetragonal or cubic phase structure or mixture of tetragonal and cubic.

The powdered copper composition may be provided in a variety of forms. As discussed further below, certain copper alloys display better wetting on YSZ than pure copper, so in many embodiments, copper composition is an alloy. However, certain embodiments of the invention use pure copper rather than an alloy. When copper alloy is used, the powdered composition may be provided in the form of a powdered alloy or as a mixture of metal powders. In certain embodiments, the powdered composition may include a mixture of metal particles and oxides or hydrides, or as oxides that become partially or fully reduced during the firing step. Examples of the powder Cu composition include powdered Cu; powdered Cu and alloying metals (and/or hydrides and/or oxides of those metals); or powdered Cu alloy (and/or oxide and/or hydride of that alloy). Alloying metals include nickel (Ni), chromium (Cr), molybdenum (Mo), titanium (Ti), vanadium (V), hafnium (Hf), and zirconium (Zr). In certain embodiments, the composition includes and/or consists essentially of Cu with
0-90 wt % Ni and
0.1-10 wt % Cr, Mo, Ti, V, Hf, Zr or mixtures of these.

As indicated, copper is typically provided as metallic copper powder or in a powdered alloy while any of the Ni, Cr, Mo, Ti, V, Hf, Zr may be provided as metals, oxides, hydrides or other precursor. For example, in one embodiment a Cu₉₄Ni₄Cr₂ compound consists essentially of Cu, Ni and Cr provided in the form Cr₂O₃. Weight percent refers to weight percent of the final alloy composition, e.g., 0.94 g Cu, 0.04 g Ni and 0.029 g Cr₂O₃ or 94 wt % Cu, 4 wt % Ni and 2 wt % Cr. Examples of other compositions include Cu₉₆Ni₄, Cu₉₄Ni₄Ti₂, and Cu₉₄Ni₄Mo₂, with the addition to the Cu or Cu alloy provided in the form of a metal (e.g., Mo or Ti metal) or oxide (e.g., Cr₂O₃ or TiO₂) or other precursor.

According to various embodiments, particle size of the YSZ and Cu-based composition powders may range from 0.1 to 10 µm.

The powdered YSZ and powdered Cu-composition are mixed to form a green compact. Block 103. Mixing may be accomplished by any suitable method; for example, in certain embodiments, the powders are mixed together using a HPC (hydroxypropyl cellulose) in isopropanol solution to make a thick paste for mixing the powders together. The compact naturally contains pores between the YSZ and metal particles, and additional poreformer may be incorporated as well. The mixture may be milled or ground as necessary to produce fine particles.

The mixture of metal and ceramic particles is then sintered in a reducing atmosphere at temperatures at or above the melting point of the copper phase. Block 105. The sintering temperature is the melting point (so that the copper phase melts) to hundreds of degrees above the melting point. In many embodiments the sintering temperature is substantially higher, e.g., at least about 100°C, than the melting point of the copper or copper alloy. The sintering process is typically carried out near atmospheric pressure.

As the compact is sintered in reducing atmosphere, various phenomena occur. Below the melting point of the Cu alloy (or pure Cu) phase, the YSZ particles begin to sinter, forming a continuous interconnected YSZ lattice network. The Cu alloy phase particles also sinter. At this stage, minimal sintering between the YSZ and Cu alloy phases is expected. Above the melting point of the Cu alloy, YSZ sintering continues while the Cu alloy becomes molten. The structural integrity and shape of the cermet is largely dictated by the YSZ phase at this point. The molten Cu alloy can be envisioned as occupying the void space within the porous YSZ lattice. As the sintering temperature increases, the YSZ surface becomes reduced. This promotes wetting of the molten Cu alloy on the YSZ surface. Thus, pooling or complete extrusion of the molten metal (as would be expected if the alloy did not wet YSZ) is prevented. Instead, the molten alloy retains fine structure and remains as an interconnected lattice interpenetrating the YSZ lattice. The sintered composition is then cooled to solidify the copper alloy network and obtain a Cu-based cermet. Block 107. In many embodiments, the YSZ network looks like sintered-together particles, while the Cu network typically does not resemble the original particulate form, but has connected regions, branches, dendritic forms, etc. This method may be used to produce porous or dense cermets, with density controlled, e.g., by the addition of alloying elements in the Cu phase, addition of poreformer, hot isostatic pressing during sintering, or adjustment of the YSZ-Cu ratio.

The process described above requires only a single step to sinter and reduce the cermet. This provides a significant advantage over existing technology in which Ni oxide and YSZ are sintered in air at a first temperature, with the Ni oxide then converted to metallic Ni by exposure to another temperature.

Obtaining a Cu-based cermet composition having an interconnected metal phase in the process described above is a result of wetting of copper or copper alloy on YSZ or other stabilized zirconia. Wetting of Cu on YSZ depends on a number of factors; for example, wetting improves as the sintering temperature is increased above the melting point of Cu. The inventors have observed moderate wetting of pure Cu on YSZ after firing at 1200°C, and excellent wetting in the same composition after firing at 1300°C. While not being bound to a particular theory, it is believed that this is related to modification of the surface chemistry (i.e. reduction) of YSZ at elevated temperature. Cu wetting on YSZ would similarly be expected when firing in a more reducing atmosphere. Wetting of Cu is also improved by adding alloying elements (as alloy or physical mixture). For instance, improved wetting of molten Cu on YSZ with additions of Zr or Ni and Cr have been reported. See Nakashima et al., "Effect Of Additional Elements Ni And Cr On Wetting Characteristics Of Liquid Cu On Zirconia Ceramics," Acta mater. 48 (2000) 4677-4681 and Iwamoto et al., Joining Of Zirconia To Metals Using Zr-Cu Alloy Engineering Fracture Mechanics Vol. 40, No. 415, pp. 931-940, 1991, both of which are incorporated by reference herein.

Another advantage of the above-described process of producing Cu-YSZ cermet is that it is compatible with sintering on a metal support. A thin active layer of Cu-YSZ can be sintered on a thicker support of porous metal (e.g., FeCr) to achieve a mechanically robust structure. Typical metal supports must be fired in reducing atmosphere to avoid extensive oxidation. As mentioned above, Ni-YSZ cermets are typically prepared by firing NiO and YSZ at high temperature (1100-1400°C) in air and then reducing to Ni at much lower temperatures (500-1000°C). While interpenetrating Ni-YSZ structures can be prepared directly at high temperature in reducing atmosphere, the Ni particles coarsen significantly and wet YSZ poorly in reducing atmosphere at the high temperatures required for sufficient YSZ sintering (1100-1450°C). This leads to low surface area for catalytic activity and poor electrical connection. Interdiffusion between the metal support and Ni can further degrade the Ni catalytic performance and affect oxidation of the metal support during operation of the SOFC. In contrast, molten Cu wets YSZ well at high temperature in reducing atmosphere, allowing a continuous, high surface area network of Cu that is well-connected to the YSZ network and metallic support.

### Cu-based cermet compositions

Another aspect of the invention relates to Cu-based cermets. These Cu-based cermets are interpenetrating networks of dopant-stabilized zirconia ceramic and copper or copper alloy. Interpenetrating networks refers to ceramic and metal networks that are mutually penetrating. This includes cermets in which the ceramic material may be thought of as permeating the metal network and/or vice versa. Depending on the application, the relative amounts of ceramic and metal in the cermet may vary. These networks are in intimate contact, having high ionic connectivity throughout the ceramic phase and high electronic connectivity throughout the copper-based phase.

As described above, the dopant-stabilized zirconia is generally an oxygen-ion-conducting stabilized zirconia ceramic having about 1-11mol% one of the following dopants: yttria, calcia, scandia, ceria, and mixtures thereof. The YSZ (or other ceramic) may be partially reduced.

The copper or copper alloy network contains copper, and in certain embodiments, at least one of nickel (Ni), chromium (Cr), molybdenum (Mo), titanium (Ti), vanadium (V), hafnium (Hf) and zirconium (Zr). During fabrication, the alloy will generally be a reduced metal; during operation the alloy may partially oxidize. In certain embodiments, the copper-based network includes and/or consists essentially of Cu with
0-90% wt Ni and
0.1-10 wt % Cr, Mo, Ti, V, Hf, Zr or mixtures of these.

This includes compositions in which some of the elements are in the form an oxide (e.g., Cr₂O₃ partially reduced during the sintering process) or other precursor. In certain embodiments, at least about 50 wt % of the copper alloy network is copper.

Depending on the application, the copper-based phase of the cermet may be used for one or both of catalysis and electrical connection. The copper structure is high surface area (due, e.g., to the good wetting of molten copper or copper alloy on the ceramic particles) and can support chemical as well as electrochemical reaction in the vicinity of a three-phase boundary between Cu, the ionic conductor, and a gaseous reactant. The copper-based network is also continuous and electronically conducting.

In certain embodiments, the cermets have a fine microstructure, e.g., the YSZ and/or Cu-based lattices have particle diameter size between about 0.1-10 µm. Pore size ranges from about 0.5-30 µm.

The cermets may be porous or dense. Dense refers to a cermet with low enough interconnected porosity so as to be impermeable. Porous cermets may be used for applications including porous anodes or barrier layers in electrochemical devices, as discussed further below. Dense Cu-based cermets may be used for applications including sealing portions of an electrochemical device or providing bonding between cermets, ceramics, and metals. In general, the cermet may have a density ranging from about 30 to 100% density.

The Cu-based cermets may be prepared by the methods described above with reference to Figure 1.

### Cu-based Cermet Electrochemical Structures

The Cu-based cermets described herein may be used in various structures, including electrochemical device structures, e.g., as an anode structure. SOFCs and other high temperature devices have a porous anode, porous cathode and dense ceramic electrolyte. Oxidation of gaseous reactants occurs in the porous anode. Embodiments of the invention include electrochemical structures having Cu-based cermet anode structures.

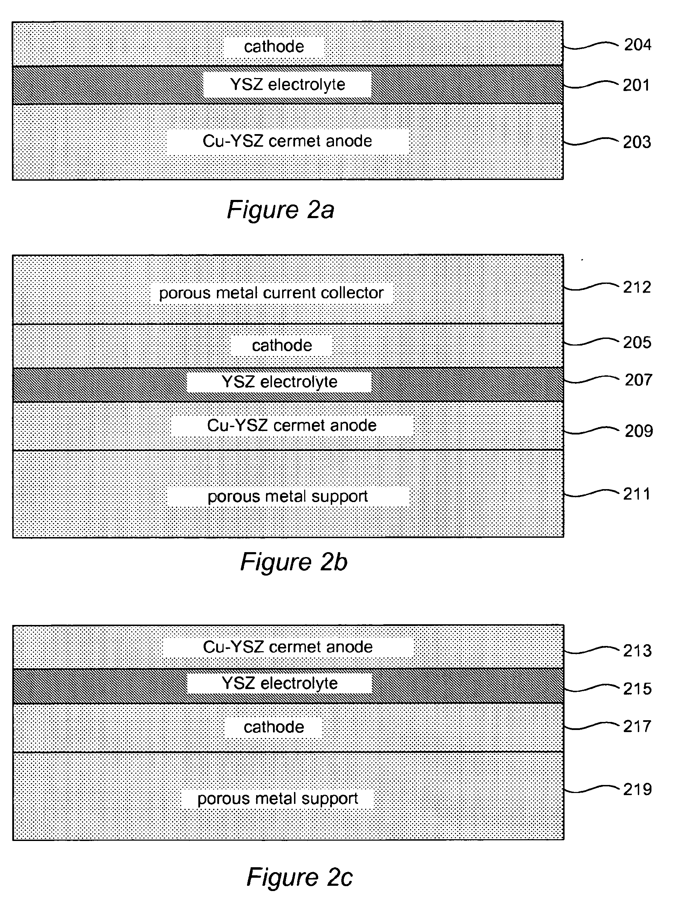

Figures 2a-c illustrate multi-layer structures having Cu-based cermet electrode in accordance with various implementations. (In the illustrations and discussion below, Cu-YSZ is used to refer to the Cu-cermets as described above, i.e., having copper or copper alloy metal and stabilized zirconia ceramic interpenetrating networks.) Figure 2a shows a cathode layer 204 on a densified YSZ electrolyte layer 201 on a porous Cu-YSZ anode layer 203. This structure forms an electrochemical cell. The Cu-YSZ layer 203 may also act as a mechanical support for the cell. For a solid oxide fuel cell, hydrogen-based fuel is provided at the anode and air is provided at the cathode. Oxygen ions (O²⁻) formed at the electrode/electrolyte interface migrate through the electrolyte and react with the hydrogen or other fuel at the fuel electrode/electrolyte interface, thereby releasing electrical energy that is collected by an interconnect/current collector (not shown). The same structure may be operated as an electrochemical reactor by applying a potential across two electrodes. Ions formed from gas (e.g., oxygen ions from air) at the cathode will migrate through the electrolyte (which is selected for its conductivity of ions of a desired pure gas) to react with a reactant stream at the anode, for example producing synthesis gas. If the electrolyte is a proton conducting thin film instead of an oxygen ion conductor, the device could be used to separate hydrogen from a feed gas containing hydrogen mixed with other impurities, for instance resulting from the steam reformation of methane (CH₄ + H₂O → 3H₂ + CO). Protons (hydrogen ions) formed from the H₂/CO mixture at one electrode/thin film interface could migrate across the electrolyte driven by a potential applied across the electrodes to produce high purity hydrogen at the other electrode. Thus the device may operate as a gas generator/purifier.

Figure 2b shows a porous cathode layer 205 on a densified electrolyte layer 207 on a thin active porous Cu-YSZ anode layer 209 on a thicker porous metal support 211. This implementation may be used where, for example, the support 211 is composed of an inexpensive high strength metal material such as FeCr. The thin active layer of Cu-YSZ can be sintered on thicker support to achieve a mechanically robust structure. As described above, the method of preparing Cu-based cermets described above with reference to Figure 1 are compatible with sintering on a metal support because they can be formed directly in high temperatures in reducing atmospheres. Also shown in Figure 2b is metal current collector 212, which is typically porous and electronically conductive. This layer serves as the current collector for cathode 205. It may be thinner than the metal support 211, as it is not required to provide structural support for the cell. This layer 212 may be a porous body, perforated sheet, wire, mesh, etc. If cathode 205 is sufficiently electronically conductive, the metal current collector 212 may not be required.

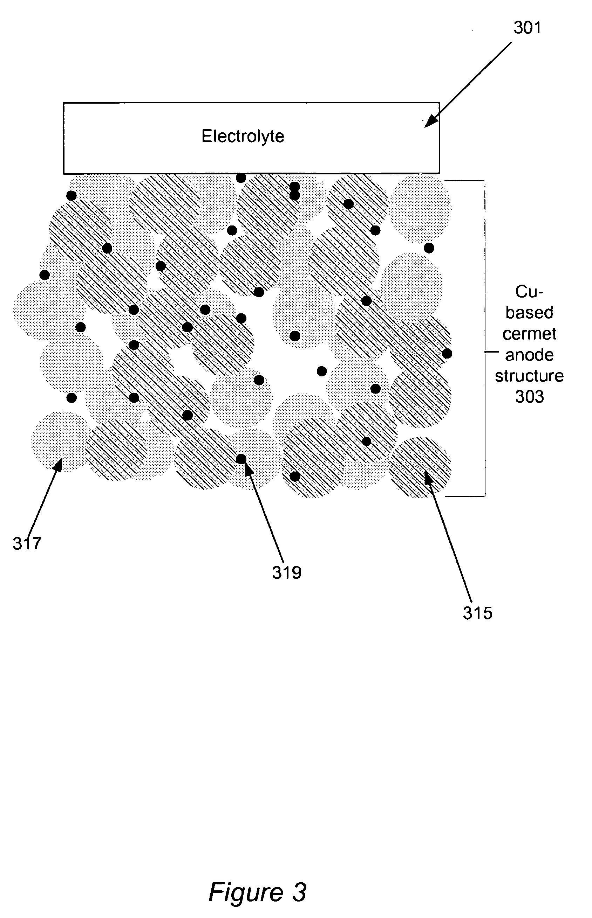

In certain embodiments, the porous metal support may be on the cathode side of the electrochemical cell. This is depicted in Figure 3c, which shows Cu-YSZ anode layer 213 contacting dense YSZ electrolyte layer 215 which contacts cathode layer 217 on porous metal support 219. A metal current collector may also be employed for the implementation of Figure 2c. The porous supports depicted in Figures 2b and 2c may be bonded to interconnects.

Figure 3 is a schematic representation of an electrolyte/Cu-based cermet multi-layer structure showing details of the Cu-based cermet according to certain embodiments. Dense electrolyte 301 is in contact with a Cu-based cermet anode structure 303. The electrolyte is a dense ion conducting material, e.g., YSZ or other oxygen-ion-conducting stabilized zirconia. Anode structure 303 includes a continuous network of Cu or Cu alloy 315 and a continuous network of YSZ or other ceramic particles 317. The metal phase forms a three-dimensional interconnected network, i.e., the metal network is contiguous and each depicted segment is part of the contiguous metal network. Similarly the ceramic network particles form a three-dimensional interconnected ceramic phase. Optional catalyst particles 319 are also shown in the schematic; these particles, e.g., Ru particles, may be dispersed in the anode. Cu is known to be a SOFC anode, with excellent carbon and sulfur tolerance, so in some embodiments, the addition of Ru or other catalyst may be necessary, with the Cu or Cu alloy alone providing sufficient catalysis. It should also be noted that, because Cu also provides an electrically connected network through the anode structure, additional catalyst material may be dispersed in the anode without the requirement that the additional catalyst form a percolating electronic network.

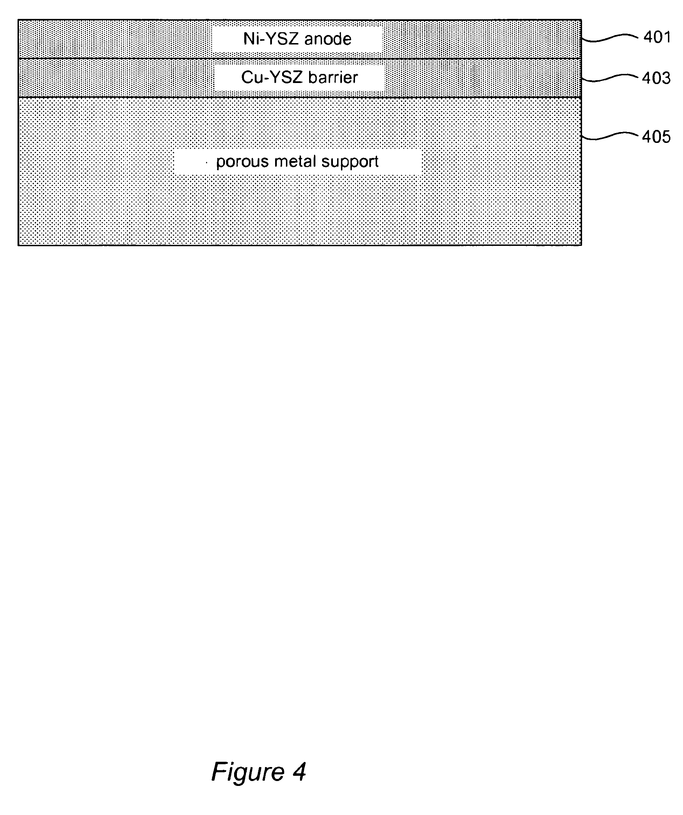

Another aspect of the invention relates to structures in which the Cu-YSZ cermet acts as a barrier layer and is disposed between a metal support and an anode layer. Figure 4 shows a schematic representation of electrochemical structure having a Cu-YSZ barrier layer 403. Cu-based cermet layer 403 is between a metal support 405 and a Ni-YSZ anode 401. The cermet provides bonding and electrical connection between the anode and metal support, and also mitigates interdiffusion between these layers. For example, when disposed between a ferritic stainless steel support and Ni/YSZ anode layer. the Cu-YSZ cermet can reduce the extent of interdiffusion of Ni from the anode and FeCr from the support. This is discussed further below in Example 2.

### Examples

The following examples are intended to illustrate various aspects of the invention, and do not limit the invention in any way.

### Example 1: Bonding of Cu alloy to Yttria Stabilized Zirconia (YSZ) by metal or oxide addition

Small amounts of oxides and/or metals were added to Cu or a Cu alloy. This was shown to improve the wetting and bonding to YSZ. Materials Used: 1-1.5 µm Cu powder, 3 µm Ni powder, ∼1 µm TiO₂, 3-7 µm Mo metal.

### Compositions

| "96Cu-4Ni" | "94Cu-4Ni-2Cr" | "94Cu-4Ni-2Ti" | "94Cu-4-Ni-2Mo" |
|---|---|---|---|
| 0.96 g Cu | 0.94 g Cu | 0.94 g Cu | 0.94 g Cu |
| 0.04 g Ni | 0.04 g Ni | 0.04 g Ni | 0.04 g Ni |
| | 0.02 g Cr₂O₃ | 0.02 g TiO₂ | 0.02 g Mo (metal) |

To each mixture an equal weight of a 2wt% HPC (hydroxypropyl cellulose) in IPA solution was added to make a thick paste for mixing the powders together. A drop of each paste was put on a polished YSZ plate (-3 cm diameter). The samples were then fired in a tube furnace with ∼60 sccm of flowing 4% H₂/He with the following heating schedule:
8 hrs to 300°C
3 hrs 20 min to 1300°C (5°C/min)
1 hr hold
3 hrs 20 min to 25°C

After firing all four samples were bonded to the YSZ disc with wetting improving from "96Cu-4Ni" < "94Cu-4Ni-2Cr" < "94Cu-4Ni-2Ti" < "94Cu-4-Ni-2Mo". This shows that the additions to Cu alloy in the form of a metal or metal oxide improve wetting on YSZ.

### Example 2: Effect of alloy composition on wetting and Cr diffusion on ferritic steel

The effect of increasing the Ni content on the wetting and on Cr diffusion through the Cu alloy was examined. During sintering of a Cu alloy or cermet in contact with FeCr containing alloys Cr and/or Fe can diffuse out of the metal support and into the Cu alloy. This can result in oxidation of the fine Cr containing metal particles and then to cracking of the cermet during fuel cell operation. It is known that Cr has very low solubility in Cu, but how the amount of Ni affects the diffusion and solubility of Cr at high temperatures is not known. After firing the following compositions on a 430 SS sheet and then placing them in an atmosphere that is reducing to Ni and Cu but oxidizing to Cr (H₂+3%H₂O at 800°C for 24 hrs) we found that Cu alloys containing ≥ 50wt% Cu avoid Cr diffusion and subsequent oxidation. From our experimentation we have found that the following composition is suitable for firing with YSZ at temperatures >1000°C in a reducing atmosphere:
Cu with
0 - 90 wt% Ni
0.1 - 10 wt% Cr, Mo, Ti, V, Hf, Zr or mixtures of these, as a metal or oxide or hydride or other precursor.

The composition may be in the form of an alloy or a mixture of metal powders or a mixture of metal particles and oxides or hydrides, etc or simply as oxides that become partially or fully reduced to metals during the firing step.

We have found that such alloy compositions can be fired with YSZ as well as co-fired with FeCr alloys. Alloys bonded to YSZ are still well bonded to the YSZ even after high temperature annealing in a fuel cell anode atmosphere (H₂+3%H₂O at 800°C for 24 hrs). If the alloy is fired in contact with another metal such as a ferritic steel, then the Cu content is preferably >50 wt% to avoid excessive Cr diffusion into the Cu alloy.

The cermet structures created with these alloys can retain a fine microstructure (<0.5-10 µm diameter feature size) even when fired above the melting point of Cu. The improved wetting and bonding make for very strong structures. As discussed above, in many cermets according to the invention, the ceramic network retains its original particulate structure, i.e., it looks like sintered-together particles, while the Cu network has connected regions, branches, dendritic forms, etc. The particles of the ceramic network and these features of the Cu network are less than ∼10µm on their smallest cross-section.

### Example 3: YSZ/Cu alloy supported SOFC

In order to assess the utility of the YSZ/Cu alloy cermet structure as a backbone for anode catalysis, a thin-film-electrolyte cell was cosintered on YSZ/Cu alloy cermet. A disk of YSZ/Cu-Ni-Cr alloy was coated with a thin layer of YSZ electrolyte and cosintered in reducing atmosphere at 1300°C. The small additions of Ni and Cr improve wetting of the Cu on YSZ. After sintering, the YSZ/Cu alloy cermet was electronically conducting at room temperature. This structure was infiltrated with a small amount of RuCl₃ which converts to Ru in fuel atmosphere. A sprayed LSCF cathode with Pt current collector was added for electrochemical testing.

### Fabrication:

A mixture of 5g 8Y YSZ (Tosoh Corp), 4.75g Cu, 0.2g Ni, 0.073g Cr₂O₃ (all powder particle sizes 1.5µm or less), 0.12g PMMA (polymethylmethacrylate) poreformer (0.5-11µm particle size), and 0.2g HPC (hydroxypropylcellulose) was ball milled 24h in IPA (isopropyl alcohol). The mixture was then dried, ground and sieved to <150µm. The resulting powder was uniaxially pressed into 1" diameter disks at 10kpsi. A disk was bisque fired at 1000°C in reducing atmosphere (4%H₂, balance Ar) for 2h. One side of the disk was then aerosol sprayed with a thin layer of 8Y YSZ from a solution of IPA and DBT (dibutylphthalate) dispersant. The resulting bilayer was cosintered in reducing atmosphere at 1300°C for 4h. After sintering, the YSZ/Cu alloy support layer was electronically conductive at room temperature, and the thin YSZ electrolyte film was dense with no cracks or pinholes. An LSCF cathode was deposited by aerosol spray to the electrolyte surface. Electrical leads consisting of Pt paste and Pt mesh were applied to the LSCF cathode and YSZ/Cu alloy support. The complete cell was mounted on a test rig and heated to 800°C for fuel cell testing with ambient air on the cathode side and moist hydrogen flowing to the anode side.

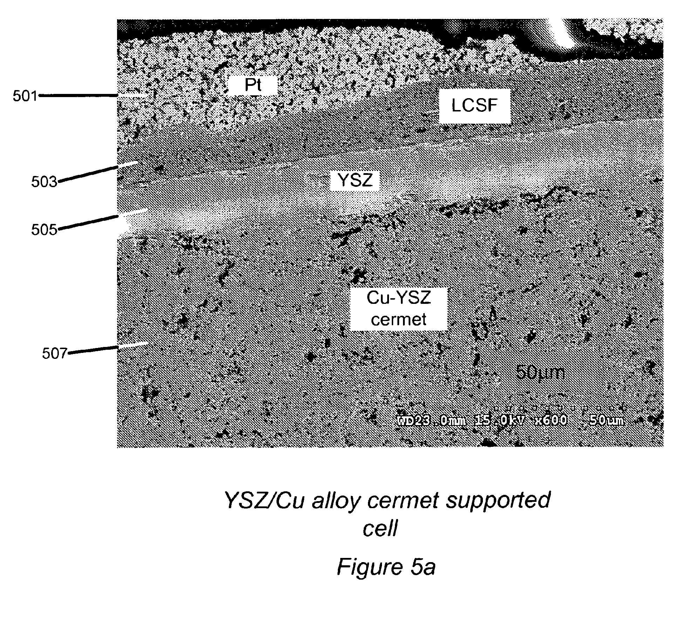

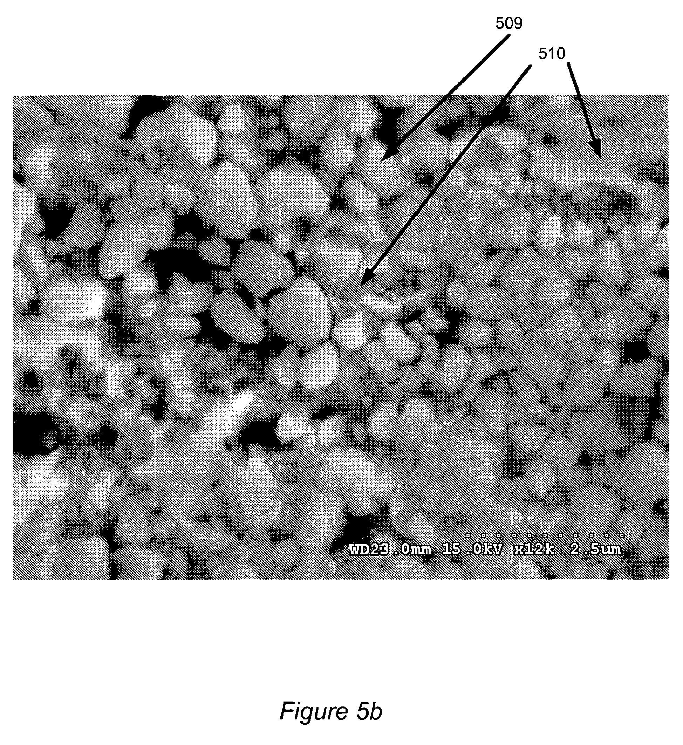

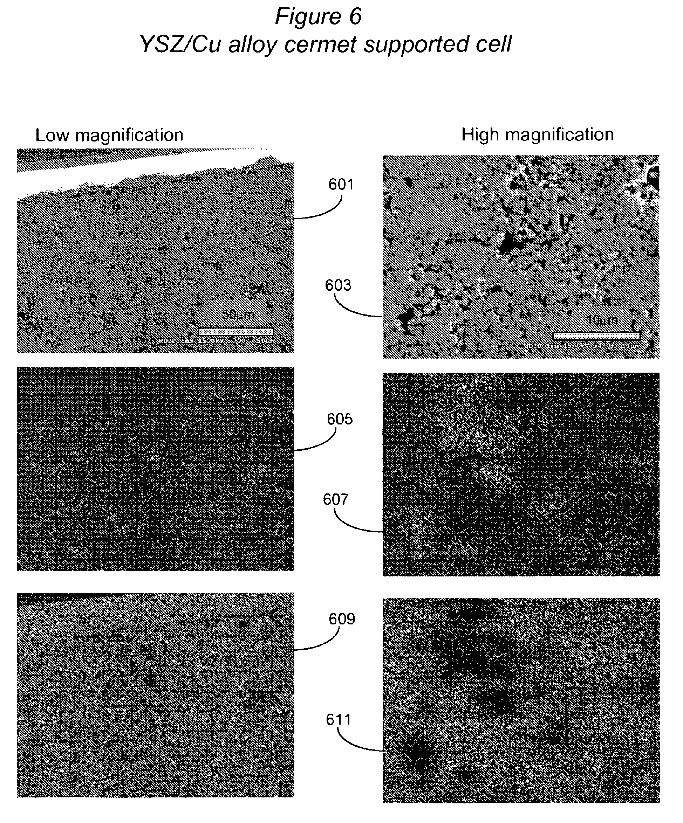

Figure 5a is an image of cross section of this cell after testing: YSZ/Cu alloy porous anode layer 507, YSZ dense electrolye layer 505, LCSF cathode 503 and Pt layer 501. Adequate bonding between the support and electrolyte is achieved. Figure 5b is an image showing the structure of the YSZ/CU-alloy cermet. The fine structure of the YSZ (509) and Cu (510) phases is retained after firing and testing. Necking between YSZ particles is not as developed as is typically observed in YSZ-only structures. Figure 6 shows SEM and EDS images. SEM images 601 and 603 show the cermet at low and high magnification, respectively. EDS maps 605 and 607 show the copper phase at low and high magnification, respectively, and EDS maps 609 and 611 show the zirconia phase at low and high magnification respectively. The SEM and EDS maps in Figure 6 confirm that Cu alloy and YSZ are evenly distributed throughout the cermet support structure. The high magnification images 603, 607 and 611 shows some regions of Cu pooling into larger features, up to 10µm in size. It may be that the Cu extrudes into the pores introduced by the poreformer, which has an average particle size of 10µm.

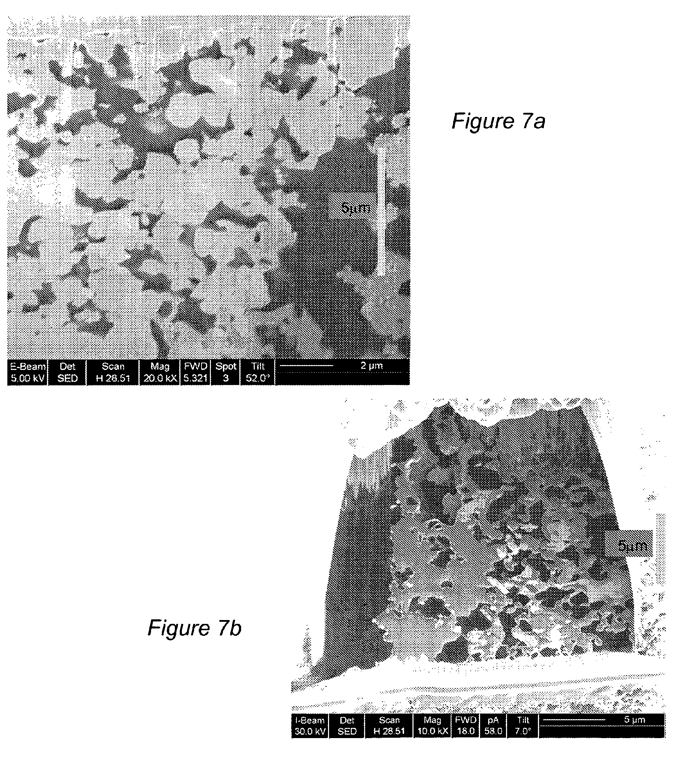

Figure 7a shows a high magnification electron image of a slice through the YSZ/Cu alloy cermet. The slice was cut with focused ion beam (FIB), providing a very clean and detailed surface. The darkest areas are epoxy, and the lighter areas are YSZ and Cu alloy. The small particle size is clear. Figure 7b shows an FIB-cut surface; the image was produced with an ion bean rather than electron beam. This provides much better contrast between YSZ and Cu alloy. The dark areas are YSZ, and the electrolyte film is visible at the left of the image. The light gray areas are epoxy, and the white areas are Cu alloy. It is clear that the Cu alloy retains a very fine feature size.

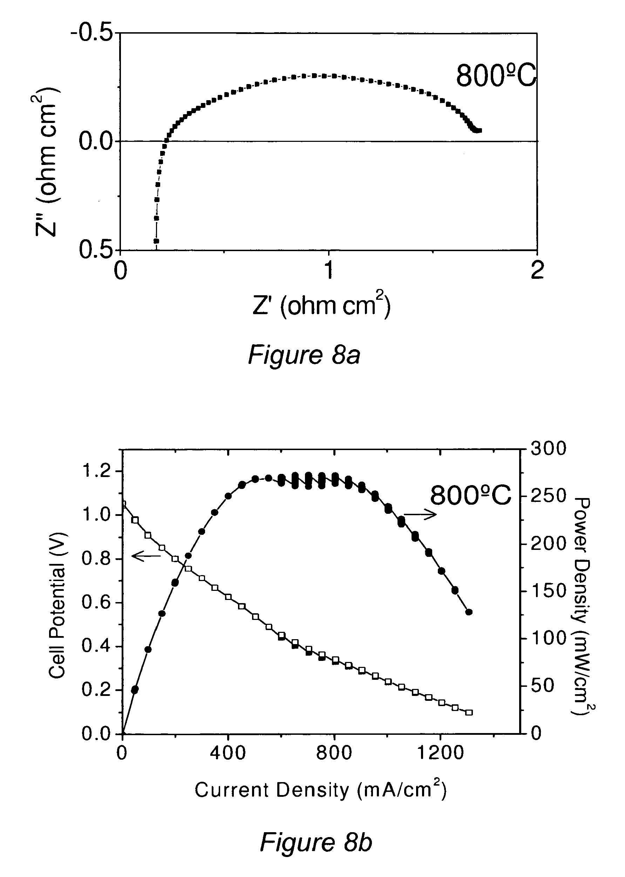

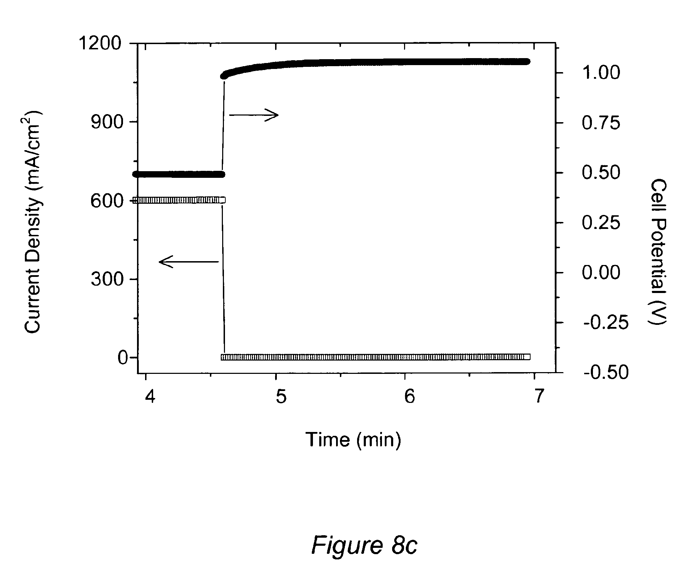

The YSZ/Cu alloy cermet-supported cell with sprayed LSCF cathode was tested for electrochemical function. The results of testing are summarized below. Figure 8a shows AC impedance data for the full cell taken at 800°C. The ohmic impedance is quite good, indicating high electronic conductivity in the alloy phase, and sufficient YSZ-phase sintering to provide good ionic conduction. The total cell impedance probably contains a significant contribution from the LSCF cathode. Figure 8b shows polarization behavior for the cell. The open circuit potential (OCP) is above 1.0V, indicating good sealing and a leak-free electrolyte layer. Maximum power density is about 275 mW/cm². Rapid cell potential recovery after current interruption, shown in Figure 8c, indicates that that ohmic and activation overpotentials are much larger than concentration polarization. Mass transport is adequate in the YSZ/Cu alloy and LSCF structures.

### Example 4: Stainless steel-supported SOFC with cosintered YSZ/Cu alloy anode layer

A 5-layer cell such as depicted in Figure 2b was prepared with metal support and YSZ/Cu alloy anode layer. The cell included the following layers:
1. porous stainless steel support
2. porous YSZ/Cu alloy anode layer
3. dense YSZ electrolyte
4. porous YSZ/LSM cathode layer
5. porous stainless steel current collector

The cell was made in accordance with methods described in U.S. Provisional Patent Application No. 60/962,054, filed July 26, 2007 and titled "Interlocking Structure For High Temperature Electrochemical Device And Method For Making The Same," incorporated by reference herein in its entirety and for all purposes.

### Fabrication:

The stainless steel support was prepared by isostatic pressing metal powder in a tube-and-mandrel mold at 20kpsi. The metal powder was prepared by mixing 9g ferritic stainless steel powder, 1g Cu (1.5µm), 0.5g PEG 6000 (polyethylene glycol), 1.5g PMMA (53-76µm), and 2g acrylic solution (15wt% in water). The mixture was dried while mixing, ground and sieved to <150µm. After pressing, the tube was debinded at 525C in air, 1h and bisque fired at 1000°C in reducing atmosphere, 2h. A layer of YSZ/Cu alloy cermet was applied to the bisque fired tube by dipcoating from a solution of 30g IPA, 5g 8y YSZ, 4.75g Cu, 0.2g Ni, 0.073g Cr₂O₃, 1g PEG 300, 1.2g acrylic beads (0.5-11µm). The support and dipped layer was then bisque fired at 1050°C in reducing atmosphere, 2h. An electrolyte layer is then deposited by aerosol spray from a solution of IPA. 8Y YSZ and DBT. The resulting 3-layer structure was then cosintered at 1300°C in reducing atmosphere, 4h. After cosintering, the cathode interlayer was applied by brushing on a YSZ slurry (2.7g aqueous acrylic dispersion (15wt% solids), 0.534g 0.3-1um YSZ powder, 0.0165g 0.5-3.5um acrylic poreformer bead, 0.0495g 7-11um acrylic poreformer bead.) A ferritic stainless steel current collector was then disposed around the tube, as provided for in Application No. PCT/US2006/029580, filed July 28, 2006 and titled "Joined Concentric Tubes," incorporated by reference herein in its entirety and for all purposes. The resulting 5-layer structure was then fired at 1275°C in reducing atmosphere, 4h. The sintered cell was braze-sealed to a cell housing and gas manifold using Ticusil (Morgan Advanced Ceramics). After sealing, the inside (anode) of the tube was infiltrated with RuCl₃ in IPA, and the outside (cathode) was infiltrated with LSM, as The cell was then mounted on a test rig and operated with ambient air and flowing moist hydrogen in the range 700-800°C.

The metal support contained 10wt% Cu in order to minimize evaporation of Cu from the thin interlayer during sintering. Before testing, the anode layer was infiltrated with a dilute solution of RuCl₃, which converts to Ru in the fuel atmosphere. The results of testing are summarized below:

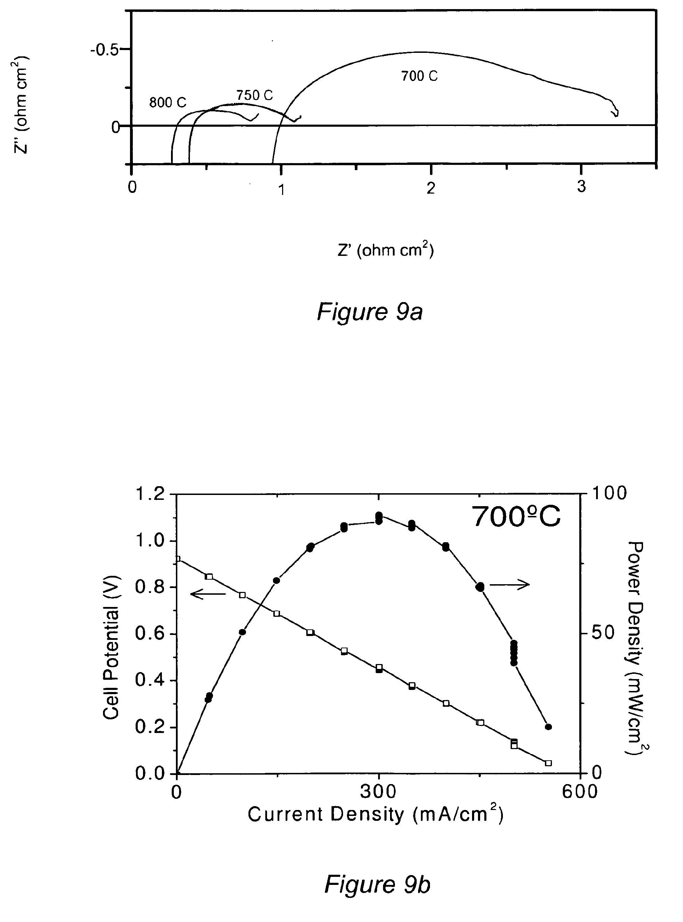

Figure 9a shows ohmic impedance. The ohmic impedance shown in Figure 9a is thermally activated, suggesting ionic conductivity dominates (i.e. electronic conductivity is very high). This is probably due to decreased YSZ necking in the presence of Cu, as seen in Figure 5b. Figure 9b shows the polarization of the cell. As shown, the polarization was linear, and maximum power density of 91 mW/cm² was achieved.

### Example 5: Dense Cu-YSZ cermet

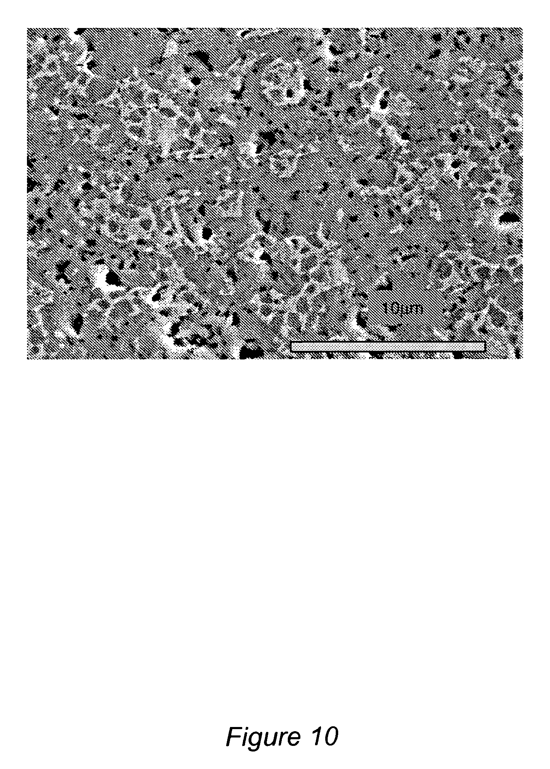

A nearly dense YSZ/Cu cermet was prepared. The cermet was fabricated by ballmilling 49wt% 8Y YSZ, 49wt% Cu, and 2wt% HPC in IPA, followed by drying, sieving to <150µm, and uniaxially pressing to 10kpsi. The resulting pellet compact was sintered in 4%H₂/balance Ar reducing atmosphere at 1300°C, 4h. Figure 10 shows an SEM image of the dense cermet. The bright areas in the image are Cu phase, the gray areas are YSZ and the small black areas are pores. Although the structure is not completely dense, the pores are quite small (<2µm) and not well connected. It is expected that near-100% density could be achieved through use of alloying elements in the Cu phase, hot isostatic pressing during sintering, or adjustment of the YSZ-Cu ratio. During sintering some of the Cu extruded out of the pores of the pellet, forming small pools and balls of Cu attached to the outside of the pellet. An additional pellet was prepared according to the protocol above, with 4wt%Ni and 1wt% Cr addition to the Cu. The extent of extrusion was diminished compared to the pure Cu case. This is presumably because the addition of Ni and Cr improves wetting of the Cu alloy to YSZ.

### Example 6: Use of Cu-YSZ cermet as barrier layer

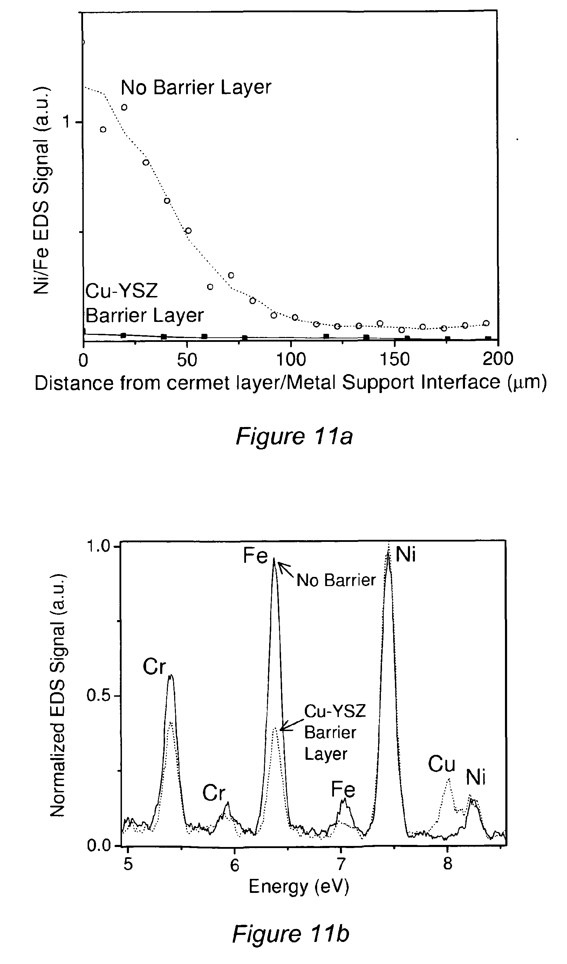

A model structure having a metal support, Cu-YSZ barrier layer and Ni-YSZ anode layer (as shown in Figure 4) was prepared. A bisque-fired porous ferritic stainless steel tubular support was brush-painted with Cu alloy/YSZ cermet paint [0.96g acrylic solution (42wt% in water), 0.216g 8y YSZ, .306g Cu, 0.013g Ni, 0.005g Cr₂O₃, 0.08g acrylic beads (0.5-11µm)]. This layer was painted over with Ni/YSZ paint [2.7g acrylic solution (15wt% in water), 0.218g 8Y YSZ, 0.322g Ni]. Another structure was prepared by painting this Ni/YSZ paint directly on a ferritic stainless steel support with no Cu-YSZ barrier layer. The resulting layered structures were cosintered at 1300°C for 4h in 4%H2/Ar balance. After sintering, the structures were mounted in epoxy, cross sectioned, and polished. The elemental compositions of the various layers were determined by energy-dispersive x-ray (EDS) analysis using a scanning electron microscope. Figure 11a shows the Ni content of the stainless steel support as a function of distance from the edge of the support touching the Ni/YSZ or Cu/YSZ layer. With direct contact between the Ni/YSZ and stainless steel, significant Ni diffusion into the stainless steel is observed. With the Cu-YSZ layer separating the stainless steel and Ni/YSZ, very little Ni diffused into the stainless steel. Figure 11b shows the EDS traces for the metal particles in the Ni/YSZ layer after sintering. With direct contact between the Ni/YSZ and stainless steel, significant diffusion of Fe and Cr into the Ni/YSZ layer is observed. With the Cu-YSZ layer separating the stainless steel and Ni/YSZ. much lower concentrations of Fe and Cr are observed.

### Conclusion

Although the foregoing invention has been described in some detail for purposes of clarity of understanding, it will be apparent that certain changes and modifications may be practiced within the scope of the appended claims. In particular, while the invention is primarily described with reference to solid oxide fuel cells, and other electrochemical devices, such as synthesis gas generators, electrolyzers, or electrochemical flow reactors, etc., other applications for the Cu-based cermets and methods of preparing them in accordance with the present invention will be apparent to those of skill in the art. For example, the cermet can be used to bond metal to YSZ. It should be noted that there are many alternative ways of implementing both the structures and processes of the present invention. Accordingly, the present embodiments are to be considered as illustrative and not restrictive, and the invention is not to be limited to the details given herein.

## Claims

1. A method of preparing a copper-based cermet composition comprising:
providing a mixture of ceramic and copper-based particulate compositions; the ceramic particulate composition comprising a stabilized zirconia, and the copper-based particulate composition comprising copper; and
sintering the mixture at a temperature greater than the melting point of the copper-based composition in a reducing atmosphere such that the copper-based composition melts and wets the ceramic particulate composition to thereby form a cermet composition comprising interpenetrating copper-based metal and ceramic networks.

2. The method of claim 1 wherein the copper-based particulate composition is a copper alloy composition comprising at least one of nickel, chromium, molybdenum, titanium, vanadium, hafnium and zirconium.

3. The method of claim 2 wherein the copper alloy composition comprises a powdered alloy.

4. The method of claim 2 wherein the copper alloy composition comprises a mixture of pure metal powders, and/or oxides or hydrides thereof.

5. The method of any of the above claims wherein the copper-based metal network comprises about 0 - 90 wt. % a Ni-containing compound; and about 0.1 - 10 wt. % a Cr, Mo, Ti, V, Hf or Zr-containing compound or combinations thereof.

6. The method of any of claims I to 4 wherein the sintering temperature is at least about 100°C above the melting point of the copper-based composition.

7. The method of any of claims 1 to 6 wherein the sintering temperature is at least about 1200°C.

8. The method of any of claims 1 to 7 wherein molten copper or copper alloy wets zirconia particles to form the interpenetrating networks.

9. The method of any of claims I to 8 further comprising cosintering the mixture with green or bisque-fired electrolyte precursor and/or metal support layers in contact with the mixture.

10. A cermet composition comprising interpenetrating ceramic and copper-based networks, said ceramic network comprising a stabilized zirconia, and said copper-based network having an electrically conductive interconnected solidified molten copper phase comprising copper and at least one of nickel, chromium, molybdenum, titanium, vanadium, hafnium and zirconium.

11. The composition of claim 10 wherein the copper-based metal network comprises about 0 - 90 wt. % a Ni-containing compound; and about 0.1-10 wt. % a Cr, Mo, Ti, V, Hf or Zr-containing compound or combinations thereof.

12. An electrochemical device structure comprising a porous anode, a dense electrolyte, and the copper-based cermet composition of claim 10 or 11.

13. The device of claim 12 wherein the cermet composition is disposed between the porous anode and a porous metal support.

14. The device of claims 12 or 13 wherein the copper-based cermet mechanically supports the electrolyte and a porous cathode.

15. The device of any of claims 12 to 14 wherein the structure is a solid oxide fuel cell structure.

16. The device of any of claims 12 to 15 or device of claim 12 wherein the average feature size of the copper-based network and/or the ceramic network ranges from about 0.1 - 10 µm in diameter.

17. The composition or device of any of claims 10 to 16 wherein the copper-based network is an interconnected, electronically conductive network.

## Patentansprüche

1. Verfahren zum Vorbereiten einer kupferbasierten Cermet-Zusammensetzung, mit:
Vorsehen eines Gemischs aus keramischen und kupferbasierten Partikelzusammensetzungen; wobei die keramische Partikelzusammensetzung stabilisiertes Zirkonoxid aufweist und die kupferbasierte Partikelzusammensetzung Kupfer aufweist; und
Sintern des Gemischs bei einer Temperatur, die größer ist als der Schmelzpunkt der kupferbasierten Zusammensetzung in einer reduzierenden Atmosphäre, so dass die kupferbasierte Zusammensetzung schmilzt und die keramische Partikelzusammensetzung benetzt, um dadurch eine Cermet-Zusammensetzung zu bilden, die sich gegenseitig durchdringende kupferbasierte Metall- und keramische Netze aufweist.

2. Verfahren gemäß Anspruch 1, wobei die kupferbasierte Partikelzusammensetzung eine Kupferlegierungszusammensetzung ist, die zumindest Nickel, Chrom, Molybdän, Titan, Vanadium, Hafnium oder Zirkon aufweist.

3. Verfahren gemäß Anspruch 2, wobei die Kupferlegierungszusammensetzung ein Legierungspulver aufweist.

4. Verfahren gemäß Anspruch 2, wobei die Kupferlegierungszusammensetzung ein Gemisch aus reinen Metallpulvern und/oder Oxiden oder Hybriden davon aufweist.

5. Verfahren gemäß einem der vorherigen Ansprüche, wobei das kupferbasierte Metallnetz ungefähr 0 - 90 Gew.-% einer nickelhaltigen Bindung; und ungefähr 0,1 - 10 Gew.-% einer Cr-, Mo-, Ti-, V-, Hf- oder Zr-haltigen Bindung oder Kombinationen davon aufweist.

6. Verfahren gemäß einem der Ansprüche 1 bis 4, wobei die Sintertemperatur mindestens ungefähr 100°C über dem Schmelzpunkt der kupferbasierten Zusammensetzung liegt.

7. Verfahren gemäß einem der Ansprüche 1 bis 6, wobei die Sintertemperatur mindestens ungefähr 1200°C beträgt.

8. Verfahren gemäß einem der Ansprüche 1 bis 7, wobei geschmolzenes Kupfer oder eine geschmolzene Kupferlegierung Zirkonoxidpartikel benetzt, um die sich gegenseitig durchdringenden Netze zu bilden.

9. Verfahren gemäß einem der Ansprüche 1 bis 8, des Weiteren mit einem Versintern des Gemischs mit einem Grün- oder geschrühten Elektrolytpräkursor und/oder Metallstützlagen, die mit dem Gemisch in Kontakt sind.

10. Cermet-Zusammensetzung mit sich gegenseitig durchdringenden keramischen und kupferbasierten Netzen, wobei das keramische Netz stabilisiertes Zirkonoxid aufweist und das kupferbasierte Netz eine elektrisch leitende, vermascht verfestigte, geschmolzene Kupferphase hat, die Kupfer und zumindest Nickel, Chrom, Molybdän, Titan, Vanadium, Hafnium oder Zirkon aufweist.

11. Zusammensetzung gemäß Anspruch 10, wobei das kupferbasierte Metallnetz ungefähr 0 - 90 Gew.-% einer nickelhaltigen Bindung; und ungefähr 0,1 - 10 Gew.-% einer einer Cr-, Mo-, Ti-, V-, Hf- oder Zr-haltigen Bindung oder Kombinationen davon aufweist.

12. Elektrochemische Vorrichtungsstruktur mit einer porösen Anode, einem dichten Elektrolyt und der kupferbasierten Cermet-Zusammensetzung gemäß Anspruch 10 oder 11.

13. Vorrichtung gemäß Anspruch 12, wobei die Cermet-Zusammensetzung zwischen der porösen Anode und einer porösen Metallstütze angeordnet ist.

14. Vorrichtung gemäß Anspruch 12 oder 13, wobei das kupferbasierte Cermet das Elektrolyt und eine poröse Kathode mechanisch stützt.

15. Vorrichtung gemäß einem der Ansprüche 12 bis 14, wobei die Struktur eine Festoxidbrennstoffzellenstruktur ist.

16. Vorrichtung gemäß einem der Ansprüche 12 bis 15 oder Vorrichtung gemäß Anspruch 12, wobei die durchschnittliche charakteristische Größe des kupferbasierten Netzes und/oder des keramischen Netzes in einem Bereich von ungefähr 0,1 - 10 µm im Durchmesser ist.

17. Zusammensetzung oder Vorrichtung gemäß einem der Ansprüche 10 bis 16, wobei das kupferbasierte Netz ein vermaschtes, elektrisch leitendes Netz ist.

## Revendications

1. Méthode de préparation d'une composition métallocéramique à base de cuivre comprenant :
- la fourniture d'un mélange de composition céramique particulaire et de composition particulaire à base de cuivre, la composition céramique particulaire comprenant un zirconium stabilisé, et la composition particulaire à base de cuivre comprenant du cuivre ; et
- le frittage du mélange à une température supérieure au point de fusion de la composition à base de cuivre dans une atmosphère réductrice de telle sorte que la composition à base de cuivre fonde et mouille la composition particulaire céramique de manière à former une composition métallocéramique comprenant des réseaux interpénétrants de métal à base de cuivre et de céramique.

2. Méthode selon la revendication 1, dans laquelle la composition particulaire à base de cuivre est une composition d'alliage de cuivre comprenant au moins un métal choisi dans le groupe consistant en le nickel, le chrome, le molybdène, le titane, le vanadium, le hafnium et le zirconium.

3. Méthode selon la revendication 2, dans laquelle la composition d'alliage de cuivre comprend un alliage sous forme de poudre.

4. Méthode selon la revendication 2, dans laquelle la composition d'alliage de cuivre comprend un mélange de poudres de métaux purs, et/ou d'oxydes ou d'hydrures de ceux-ci.

5. Méthode selon l'une quelconque des revendications précédentes, dans laquelle le réseau métallique à base de cuivre comprend environ 0 - 99 % en poids d'un composé contenant du nickel ; et d'environ 0,1 -10 % en poids d'un composé contenant du chrome, du molybdène, du titane, du vanadium, du hafnium ou du zirconium, ou des combinaisons de ceux-ci.

6. Méthode selon l'une quelconque des revendications 1 à 4, dans laquelle la température de frittage est au moins égale à environ 100°C au-dessus du point de fusion de la composition à base de cuivre.

7. Méthode selon l'une quelconque des revendications 1 à 6, dans laquelle la température de frittage est au moins égale à environ 1200°C.

8. Méthode selon l'une quelconque des revendications 1 à 7, dans laquelle du cuivre en fusion ou de l'alliage de cuivre en fusion mouille des particules de zirconium afin de former les réseaux interpénétrants.

9. Méthode selon l'une quelconque des revendications 1 à 8, comprenant en outre le co-frittage du mélange avec un précurseur d'électrolyte vert ou biscuit et/ou des couches de support métalliques en contact avec le mélange.

10. Composition métallocéramique comprenant des réseaux de céramique et à base de cuivre interpénétrants, ledit réseau céramique comprenant un zirconium stabilisé, et ledit réseau à base de cuivre présentant une phase de cuivre fondu solidifiée interconnectée conductrice d'électricité, et au moins un métal choisi dans le groupe consistant en le nickel, le chrome, le molybdène, le titane, le vanadium, le hafnium et le zirconium.

11. Composition selon la revendication 10, dans laquelle le réseau métallique à base de cuivre comprend environ 0 - 90 % en poids d'un composé contenant du nickel ; et d'environ 0,1 - 10 % en poids d'un composé contenant du chrome, du molybdène, du titane, du vanadium, du hafnium ou du zirconium, ou des combinaisons de ceux-ci.

12. Structure de dispositif électrochimique comprenant une anode poreuse, un électrolyte dense, et la composition métallocéramique à base de cuivre de l'une quelconque des revendications 10 ou 11.

13. Dispositif selon la revendication 12, dans lequel la composition métallocéramique est disposée entre l'anode poreuse et une couche support poreuse métallique.

14. Dispositif selon l'une quelconque des revendications 12 ou 13, dans lequel la composition métallocéramique à base de cuivre soutient mécaniquement l'électrolyte et une cathode poreuse.

15. Dispositif selon l'une quelconque des revendications 12 à 14, dans lequel la structure est une structure de cellule de combustible à oxyde solide.

16. Dispositif selon l'une quelconque des revendications 12 à 15, ou selon un dispositif de la revendication 12, dans lequel la taille moyenne des caractéristiques du réseau à base de cuivre et/ou du réseau céramique se situe entre environ 0,1 -10 micromètres de diamètre.

17. Composition ou dispositif selon l'une quelconque des revendications 10 à 16, dans laquelle ou lequel le réseau à base de cuivre est un réseau interconnecté, conducteur d'électricité.
